# Europäisches Patentamt
## European Patent Office
### Office européen des brevets

(19)

(11) Veröffentlichungsnummer: **0 299 949 B1**

(12) **EUROPÄISCHE PATENTSCHRIFT**

(45) Veröffentlichungstag der Patentschrift :
**27.03.91 Patentblatt 91/13**

(51) Int. Cl.$^5$ : **B62D 61/12**

(21) Anmeldenummer : **88890176.6**

(22) Anmeldetag : **06.07.88**

(54) **Mehrachsiges Nutzfahrzeug.**

(30) Priorität : **10.07.87 AT 1745/87**

(43) Veröffentlichungstag der Anmeldung :
**18.01.89 Patentblatt 89/03**

(45) Bekanntmachung des Hinweises auf die
Patenterteilung :
**27.03.91 Patentblatt 91/13**

(84) Benannte Vertragsstaaten :
**CH DE GB LI NL SE**

(56) Entgegenhaltungen :
**DE-A- 2 359 690**
**DE-A- 2 635 668**
**FR-A- 2 177 784**

(73) Patentinhaber : **STEYR-DAIMLER-PUCH
AKTIENGESELLSCHAFT
Franz-Josefs-Kai 51
A-1010 Wien (AT)**

(72) Erfinder : **Täuber, Reinhold
Im Hammergrund 21
A-4400 Steyr (AT)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein mehrachsiges Nutzfahrzeug mit einer über eine pneumatische Federeinrichtung mit druckregelbarem Luftspeicher am Fahrgestell abgestützten, anhebbaren Fahrzeugachse, wie es z.B. aus DE-U- 7 208 032 bekannt ist.

Um den Reifen- und Bremsenverschleiß herabzusetzen und den Kraftstoffverbrauch zu verringern, ist es bei mehrachsigen Nutzfahrzeugen vielfach üblich, bei leerem Fahrzeug bzw. Teillastbetrieb eine Achse anzuheben. Außerdem ist das kurzzeitige Anheben dieser Fahrzeugachse günstig, um auf schlecht griffiger Fahrbahn die benachbarte Triebachse des Nutzfahrzeuges höher zu belasten.

Es ist bereits bekannt, die anhebbare Fahrzeugachse über eine pneumatische Federeinrichtung mit Luftspeicher am Fahrgestell abzustützen, wobei die Druckregelung des Luftspeichers dazu dient, das gewünschte Achslastverhältnis zwischen der Triebachse und der anhebbaren Achse zu erreichen bzw. einzustellen. Es ist ferner bekannt, zum Anheben der betreffenden Achse einen Kolbentrieb oder einen Luftfederbalg zu verwenden, der mit Druckluft entsprechend beaufschlagt werden muß. Nachteilig ist hiebei, die verhältnismäßig lange Ansprechzeit, die sich insbesondere dann ungünstig auswirkt, wenn es darum geht, auf rutschiger Fahrbahn die benachbarte Triebachse höher zu belasten. Zum Anheben der einen Fahrzeugachse stehen auch hydraulische Kolbentriebe in Verwendung, die aber wegen des hiefür notwendigen eigenen Hydrauliksystems den erforderlichen technischen Aufwand beträchtlich erhöhen.

Somit liegt der Erfindung die Aufgabe zugrunde, diese Mängel zu beseitigen und ein Nutzfahrzeug der eingangs beschriebenen Art zu schaffen, bei dem unter Verringerung des Konstruktionsaufwandes ein jeweils rascheres Anheben der betreffenden Fahrzeugachse gewährleistet ist.

Die Erfindung löst die gestellte Aufgabe dadurch, daß wenigstens eine mit der Fahrzeugachse im Hebesinn verbundene Gasspeicherfeder vorgesehen ist und deren Federkraft das Gesamtachsgewicht übersteigt.

Die Gasspeicherfeder benötigt keinerlei Einrichtung zu ihrer Beaufschlagung bzw. Steuerung, sie arbeitet also völlig selbständig, was auch die entsprechende Verringerung des technischen Aufwandes mit sich bringt. Wenn die betreffende Fahrzeugachse angehoben werden soll, braucht nur der Luftspeicher der für die Achse ohnehin erforderlichen Federeinrichtung entlüftet zu werden, um die Gasspeicherfeder im Hebesinn auf die Fahrzeugachse zur Wirkung zu bringen, wobei dieser Vorgang ohne lange Ansprechzeit vor sich geht. Da die Federkraft der Gasspeicherfeder das Gesamtgewicht der Fahrzeugachse übersteigt, wird die Fahrzeugachse auch dann in angehobener Stellung gehalten, wenn der Luftspeicher der Federeinrichtung entlüftet ist und durch Fahrstöße im Senksinne wirkende Massenkräfte auftreten sollten.

Besonders zweckmäßig ist es, wenn die Gasspeicherfeder als ziehende Gasspeicherfeder ausgebildet ist. In diesem Fall kann nämlich die Gasspeicherfeder unmittelbar an der Fahrzeugachse bzw. an deren Führungslenkern angreifen und es erübrigen sich sonst notwendige Hebelgestänge. Es ist allerdings auch möglich, eine drückende Gasspeicherfeder vorzusehen und diese über einen Winkelhebel und ein Zuggestänge mit den Achsführungslenkern zu verbinden.

Erfindungsgemäß kann schließlich die Gasspeicherfeder als Gashydraulikfeder ausgebildet sein. Bei einer solchen Feder wird während der Gaskompression ein hydraulisches Mittel durch eine Drosselstelle gedrückt, so daß sich ein Dämpfungseffekt einstellt, der dazu herangezogen werden kann, die Gashydraulikfeder zugleich als Stoßdämpfer für die anhebbare Fahrzeugachse zu verwenden.

In der Zeichnung ist der Erfindungsgegenstand beispielsweise dargestellt, und zwar zeigen

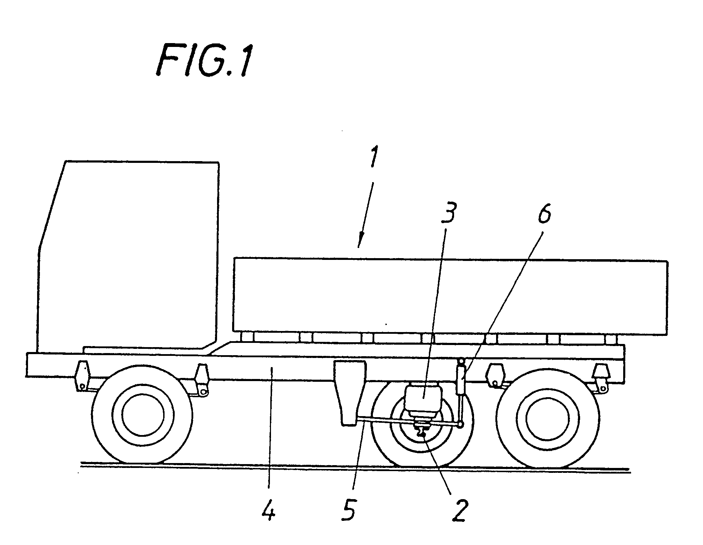

Fig. 1 ein dreiachsiges Lastkraftfahrzeug in vereinfachter Darstellung bei einseitig abgenommenem Rad der anhebbaren Fahrzeugachse in Seitenansicht und

Fig. 2 eine Gashydraulikfeder in schematischer Schnittdarstellung im größeren Maßstab.

Das als Lastkraftwagen ausgebildete Nutzfahrzeug 1 besitzt zwei Hinterachsen, von denen die vordere Hinterachse 2 anhebbar ist. Diese Hinterachse 2 stützt sich über einen Luftfederbalg 3 am Fahrgestell 4 ab und weist Führungslenker 5 auf, an denen als ziehende Gasspeicherfedern ausgebildete Gashydraulikfedern 6 angreifen. Wird der Luftfederbalg 3 entlüftet, so kommen die Gashydraulikfedern 6 zur Wirkung und schwenken die Führungslenker 5 aufwärts, so daß die Räder der Fahrzeugachse 2 von der Fahrbahn abgehoben werden.

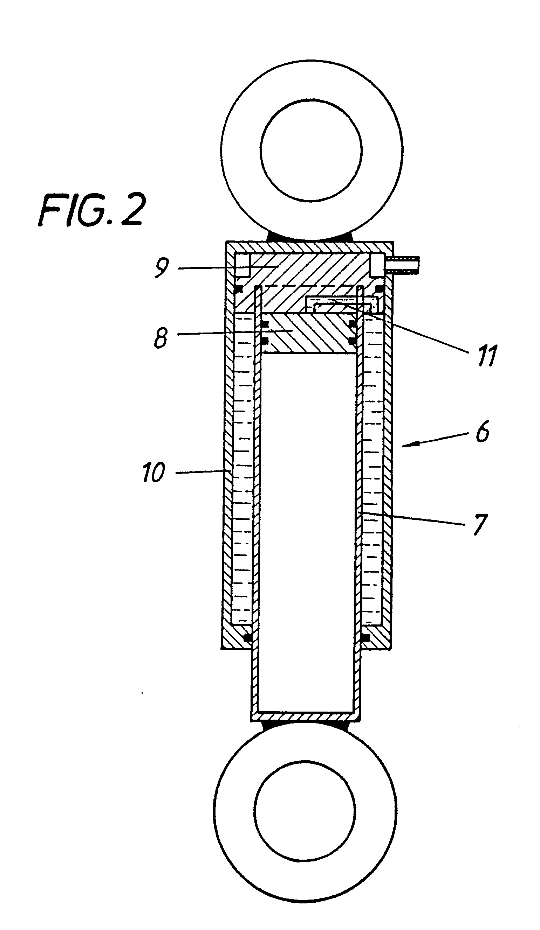

Gemäß Fig. 2 weist die Gashydraulikfeder 6 einen mit Stickstoff gefüllten Zylinder 7 auf, an dem das untere Anlenkauge der Gashydraulikfeder befestigt ist. Der Zylinder 7 ist an seinem oberen ende mit einem Außenkolben 9 fest verbunden, der in einem Überwurfzylinder 10 gleitet. Der Überwurfzylinder 10 trägt das obere Anschlußauge und bildet um den Zylinder 7 herum einen mit Öl od.dgl. gefüllten Ringraum, der über Drosselbohrungen 11 im Außenkolben 9 mit der Oberseite des Kolbens 8 in Verbindung steht. Wird diese Gashydraulikfeder 6 auf Zug beansprucht, so verdrängt der Außenkolben 9 das im Ringraum befindliche Öl, das über die Drosselbohrung 11 auf den Kolben 8 einwirkt und das Gas im Zylinder 7 mittelbar zusammendrückt. Durch die Drosselbohrungen 11 wird der gewünschte Dämpfungseffekt erzielt.

Ansprüche

1. Mehrachsiges Nutzfahrzeug mit einer über eine pneumatische Federeinrichtung mit druckregelbarem Luftspeicher am Fahrgestell abgestützten, anhebbaren Fahrzeugachse, dadurch gekennzeichnet, daß wenigstens eine mit der Fahrzeugachse (2) im Hebesinn verbundene Gasspeicherfeder (6) vorgesehen ist und deren Federkraft das Gesamtachsgewicht übersteigt.

2. Nutzfahrzeug nach Anspruch 1, dadurch gekennzeichnet, daß die Gasspeicherfeder (6) als ziehende Gasspeicherfeder ausgebildet ist.

3. Nutzfahrzeug nach den Ansprüchen 1 und 2, dadurch gekennzeichnet, daß die Gasspeicherfeder (6) als Gashydraulikfeder ausgebildet ist.

Claims

1. A multi-axle commercial vehicle comprising a vehicle axle which is adapted to be raised and is supported on the chassis by a pneumatic spring means having a pressure-controllable air accumulator, characterized in that at least one gas accumulator spring (6) is provided, which is connected to the vehicle axle (2) and tends to raise the same and has a spring force in excess of the total axle weight.

2. A commercial vehicle according to claim 1, characterized in that the gas accumulator spring (6) consists of a pulling gas accumulator spring.

3. A commercial vehicle according to claims 1 and 2, characterized in that the gas accumulator spring (6) consists of a gas-hydraulic spring.

Revendications

1. Véhicule utilitaire à plusieurs essieux ayant un essieu moteur soulevable, appuyé contre le chassis par l'intermédiaire d'un dispositif élastique pneumatique avec un accumulateur d'air réglable en pression, caractérisé en ce qu'il est prévu au moins un ressort (16) à gaz, relié à l'essieu moteur (2) dans le sens du soulèvement, dont la force élastique surmonte le poids total de l'essieu.

2. Véhicule utilitaire selon la revendication 1 caractérisé en ce que le ressort (5) à gaz est constitué par un ressort à gaz de traction.

3. Véhicule utilitaire selon les revendications 1 et 2 caractérisé en ce que le ressort (6) à gaz est constitué par un ressort hydraulique à gaz.

# FIG.1

FIG.2